# FASCICULE DE BREVET EUROPEEN

(11) **EP 2 229 671 B1**
(45) Date de publication et mention de la délivrance du brevet: **17.07.2013**
(21) Numéro de dépôt: 08869685.1
(22) Date de dépôt: 11.12.2008
(51) Int. Cl.: G09F 3/03, B65D 63/10, A01K 11/00

(54) **LIEN POUR BAGUE D'IDENTIFICATION INCLUANT UN ORGANE DE BLOCAGE**
BINDUNG FÜR EINEN IDENTIFIKATIONSRING MIT VERSCHLUSSELEMENT
TIE FOR IDENTIFICATION RING INCLUDING A LOCKING MEMBER

(30) Priorité: 07.01.2008 FR 0850059
(43) Date de publication de la demande: 22.09.2010
(73) Titulaire: A. Raymond et Cie., 38000 Grenoble (FR)
(72) Inventeur: LEGAT, Jean-Jacques, F-38690 Colombe (FR); LEGALL, Antoine, F-38120 Saint-Egrève (FR)
(74) Mandataire: RACKETTE Partnerschaft Patentanwälte
(86) Numéro de dépôt international: PCT/EP2008/010500
(87) Numéro de publication internationale: WO 2009/086875

(56) Documents cités:
- FR-A- 2 131 531
- FR-A- 2 507 575
- GB-A- 2 062 083
- US-A- 4 106 801

## Description

L'invention concerne un lien comprenant une bande s'étendant selon une première direction longitudinale entre deux parties d'extrémité munies respectivement d'une partie femelle et d'une partie mâle d'un système de fixation, et un organe de blocage de la partie mâle dans la partie femelle quand la partie mâle est insérée dans la partie femelle.

Le lien se ferme au niveau du système de fixation en rapprochant les deux parties d'extrémité de la bande pour former une bague. La partie mâle du système de fixation s'insère dans la partie femelle, puis l'organe de blocage vient bloquer la partie mâle dans la partie femelle.

Un tel lien peut servir par exemple de bague d'identification destinée à être posée sur un membre inférieur (patte avant ou arrière, bras, etc.) d'un animal. La réglementation peut en effet imposer que les animaux de type ovin, caprin et autres soient bagués, parfois dès leur naissance, par exemple dans un but de traçabilité de la viande, sans qu'il soit possible de dissimuler la dépose et la repose d'une bague sur un animal. Ainsi, il existe un besoin pour un lien permettant à un utilisateur de voir immédiatement et de manière sûre si le lien a été ouvert, déposé et reposé ou si une simple tentative d'ouverture et/ou de dépôt a été effectuée.

On connaît du document de brevet FR2131531 un lien constitué d'une bande dont les extrémités sont reliées après avoir été rabattues l'une sur l'autre pour former une bague. Chacune des extrémités de la bande comporte une partie d'un système de fixation, respectivement mâle et femelle, et l'extrémité munie de la partie mâle comporte en outre un organe de blocage de la partie mâle dans la partie femelle. L'organe de blocage se présente sous la forme d'un capuchon qui vient se verrouiller sur la partie mâle en superposition sur la partie femelle entourant la partie mâle. Toutefois, cette bague ne permet pas à un utilisateur de s'assurer de manière visuelle et sûre que le lien n'a pas été forcé. En effet, on peut imaginer un utilisateur malveillant qui forcerait la bague en la détériorant, puis la reposerait sur un autre animal en rassemblant les deux parties d'extrémités, par collage par exemple, ce qui pourrait passer inaperçu du fait de la présence du capuchon de l'organe de blocage. La demande de brevet GB 2 062 083 décrit un lien tel que défini dans le préambule de la revendication 1.

Le but de l'invention est de proposer une bague réalisée à partir d'un lien qui pallie cet inconvénient.

En particulier, un but de l'invention est de proposer un lien pour former une bague d'identification pouvant être posée sur un membre inférieur d'un animal et en particulier sur le paturon d'un ovin ou d'un caprin, dans laquelle il est prévu un organe de blocage du système de fixation qui présente un haut degré de sécurité contre la fraude.

A cet effet, l'invention a pour objet un lien tel qu'énoncé dans la revendication 1.

La lanière de l'organe de blocage permet de disposer d'une zone de marquage plane supplémentaire à celle fournie par la bande ce qui renforce les possibilités de contrôle visuel de l'intégrité de la bague d'identification. Avec cette construction, la lanière, une fois verrouillée dans la fente de la partie mâle du système de fixation, ne peut plus être retirée normalement sans être détériorée. Il en résulte que les possibilités de fraude sont rendues encore plus compliquées.

L'invention peut présenter les particularités suivantes :
- un second bossage est disposé sur la lanière de telle manière à venir en butée contre le verrou quand le premier bossage vient en butée contre la bride ;
- la première extrémité de la lanière comporte une zone de rupture, lesdits crans étant interposés entre la zone de rupture et ledit second bossage ;
- la lanière comporte une zone de marquage sensiblement rectangulaire et plane interposée entre lesdits premier et second bossages ;
- la lanière est tenue de façon détachable à la bande parallèlement à la première direction longitudinale par au moins un tenon;
- la lanière est tenue à la bande perpendiculairement à la première direction longitudinale par une zone charnière de la lanière;
- le premier bossage est disposé à proximité de la zone charnière de la lanière ;
- ladite bande présente entre ses deux parties d'extrémité une fente longitudinale sensiblement en forme de T ;
- la bande comporte deux zones de marquage sensiblement rectangulaires et planes disposées de part et d'autre de la fente longitudinale en forme de T ;
- la bande est équipée d'un dispositif d'identification électronique RFID ;
- la partie femelle du système de fixation est une ouverture dans la bande bordée par une zone sécable de la bande ;
- la partie femelle du système de fixation est une ouverture dans la bande et la partie mâle du système de fixation est une protubérance munie d'une saillie coopérant avec un bord de l'ouverture dans la bande quand lesdites parties mâle et femelle du système de fixation sont insérées l'une dans l'autre.

Le lien selon l'invention avec le système de fixation et le moyen de verrouillage et avec l'organe de blocage peut être réalisé d'une seule pièce par moulage par injection d'une matière plastique avec un moule simple, notamment si on prévoit que le verrou, la partie mâle du système de fixation avec sa fente ainsi que la bride latérale disposée d'un côté de ladite fente soient réalisés avec des contre dépouilles qui sont orientées d'un même côté de la bande, de préférence le côté qui correspond à la surface intérieure de la bague ce qui limite les possibilités de fraude.

La construction du lien selon l'invention présente l'avantage d'une mise en place sur un animal qui est simple et relativement intuitive avec éventualité possibilité d'agrandissement du diamètre de la bague, le verrouillage de la partie mâle dans la partie femelle du système de fixation à l'aide de la lanière de blocage étant également simple à réaliser. Par ailleurs, ce lien en une seule pièce selon l'invention est peu coûteux à réaliser.

L'invention sera encore mieux comprise à la lecture de la description qui suit et qui est illustrée par les dessins.
La figure 1 est une vue en perspective de dessus d'un exemple de réalisation d'un lien selon l'invention, dans un état initial du lien avant formation d'une bague.
La figure 2 est une vue partielle en perspective de dessous de l'extrémité de la bande comportant la partie mâle du système de fixation du lien de la figure 1.
La figure 3 est une vue en perspective de dessus d'un autre exemple de réalisation d'un lien selon l'invention, dans un état initial du lien avant formation d'une bague.

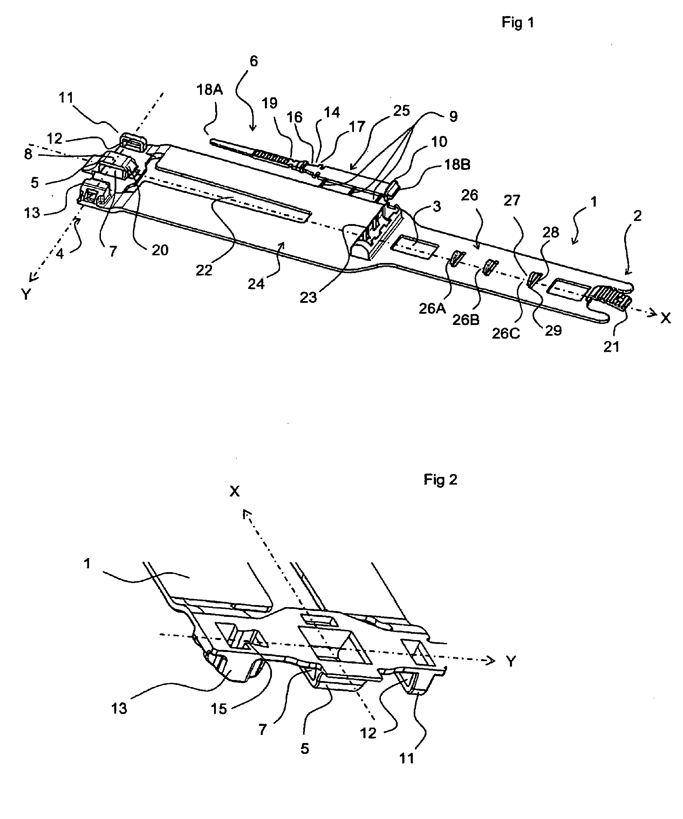

Sur la figure 1, le lien selon l'invention comprend une bande 1 souple qui s'étend selon une première direction longitudinale X entre une première partie d'extrémité 2 qui est munie d'une partie femelle 3 d'un système de fixation et une seconde partie d'extrémité 4 qui est munie d'une partie mâle 5 du système de fixation, cette partie mâle 5 étant agencée pour s'insérer dans la partie femelle 3 du système de fixation quand les deux parties d'extrémité 2,4 sont rapprochées l'une sur l'autre, c'est-à-dire superposées, en courbant la bande 1 pour former une bague.

Selon l'invention, le lien comprend un organe de blocage 6 permettant de bloquer la partie mâle 5 dans la partie femelle 3 du système de fixation quand la partie mâle 5 est insérée dans la partie femelle 3.

La partie femelle du système de fixation est ici une ouverture 3 dans la bande 1 disposée dans l'axe longitudinal X de la bande 1 à une certaine distance du bord d'extrémité de la partie d'extrémité 2 et ayant une forme sensiblement rectangulaire, comme on le voit sur la figure 1.

La partie mâle du système de fixation est ici une protubérance 5 disposée près du bord d'extrémité de la partie d'extrémité 4 de la bande 1 qui est une bride en forme de U inversé qui définit entre les branches du U une fente 7 dans une seconde direction Y sensiblement perpendiculaire à ladite première direction longitudinale X. La face supérieure 8 de la bride 5 (c'est-à-dire la base du U) de forme sensiblement rectangulaire est ajustée à la taille de l'ouverture 3 pour s'insérer avec un certain serrage dans celle-ci. En particulier, la face supérieure 8 est ajustée en vue d'obtenir un coulissement de la bride 5 dans l'ouverture 3 sans trop de jeu transversal à la direction X quand cette ouverture 3 est agrandie de façon modulaire selon la direction X comme cela sera décrit ci-après.

Comme on le voit sur la figure 1, l'organe de blocage comprend une lanière 6 dimensionnée en largeur et épaisseur de façon à permettre l'insertion sans frottement de la lanière 6 dans la fente 7.

Selon un premier mode de réalisation représenté sur la figure 1, la lanière 6 peut être initialement tenue de façon détachable à la bande 1 par l'intermédiaire d'au moins un tenon 9. La lanière 6 s'étend donc initialement dans la direction longitudinale X, c'est-à-dire que la lanière 6 est sensiblement parallèle à la bande 1. Cet au moins un tenon 9 est destiné à être rompu facilement par un utilisateur afin de détacher la lanière 6 de la bande 1 pour pouvoir former une bague, comme cela sera décrit ci-dessous. De préférence, comme représenté sur la figure 1, trois tenons 9 chacun sous la forme d'une bandelette mince reliant la bande 1 et la lanière 6 sont répartis le long de la lanière 6 entre un premier bossage 10 et un deuxième bossage 17.

Pour verrouiller le lien de manière à former une bague indémontable avec la bande 1, on détache d'abord la lanière 6 de la bande 1 en rompant les tenons 9. Puis, on passe la bride 5 dans l'ouverture 3 en dégageant la fente 7 au dessus de l'ouverture 3 dans la bande 1. On insère ensuite la lanière 6 dans la fente 7 par une première extrémité 18A de la lanière 6, selon la seconde direction Y sensiblement perpendiculaire à ladite première direction longitudinale X, en tirant suffisamment la lanière 6 suivant le sens d'insertion selon la seconde direction Y jusqu'à ce qu'elle franchisse une certaine position d'insertion où elle est verrouillée dans les deux sens opposés selon la seconde direction Y. La lanière 6 se superpose comme une goupille sur la bande 1 au-dessus de l'ouverture 3 ce qui empêche le dégagement de la bride 5 hors de l'ouverture 3.

Comme visible sur la figure 1, le système de verrouillage en position de la lanière 6 dans la fente 7 comprend le bossage 10 de la lanière 6 prévu à une deuxième extrémité 18B de la lanière 6.

La figure 2 montre en partie le système de verrouillage vu de dessous qui comprend encore une bride 11 en forme de U inversé formant une fente 12 dans laquelle peut s'insérer la lanière 6, cette bride 11 étant disposée latéralement d'un côté de la fente 7 sur la bande 1.

Le système de verrouillage comprend encore un verrou 13 disposé latéralement de l'autre côté de la fente 7 sur la bande 1, en alignement avec la fente 7 et la fente 12 de la bride 11. Le verrou 13 définit une sorte de cage dans laquelle viennent se bloquer des crans 14 prévus à l'extrémité libre de la lanière 6. Ces crans 14 sont par exemple deux dents trapézoïdales disposées respectivement sur les deux bords latéraux de la lanière 6 ou une succession de telles dents, ces crans 14 coopérant avec des épaulements 15 complémentaires formés sur les parois intérieures du verrou 13, visibles sur la figure 2, de sorte à autoriser un mouvement de la lanière 6 dans un seul sens d'insertion selon la seconde direction Y mais à empêcher un mouvement de la lanière 6 dans le sens opposé à ce sens d'insertion.

Pour verrouiller le système de fixation selon l'invention, la lanière 6, après avoir été détachée de la bande 1, est passée d'abord dans la fente 12 de la bride 11, puis dans la fente 7 de la bride 5, puis enfin dans le verrou 13 où les crans 14 viennent s'engager contre les épaulements 15. Cet organe de blocage selon l'invention est conçu de telle manière que le bossage 10 arrive en butée contre un côté latéral de la bride 11 en même temps que les crans 14 s'engagent contre les épaulements 15 du verrou 13 de sorte qu'on empêche à partir de cette position d'insertion de la lanière 6 dans la fente 7, tout mouvement ou coulissement de la lanière 6 dans les deux sens suivant la direction Y.

Comme visible sur la figure 1, chaque cran 14 présente une face 16 en pente inclinée par rapport à la direction Y et le second bossage 17 est prévu sur la lanière 6 entre le bossage 10 et les crans 14 de telle manière à venir en butée contre un côté latéral du verrou 13 au même moment où le bossage 10 arrive en butée contre la bride 11 comme indiqué ci-dessus, alors que l'extrémité 18A de la lanière 6 ressort du verrou 13.

On comprendra que le verrouillage du système de fixation selon l'invention est réalisé par la disposition latérale relative du verrou 13 et de la bride 11 sur la bande 1, et des crans 14 et des premier et second bossages 10,17 sur la lanière 6, qui sont espacés les uns des autres de telle sorte que la distance entre la face interne du premier bossage 10 et l'arrête transversale des crans 14 est sensiblement identique ou légèrement supérieure à la distance entre la face externe de la bride 11 et l'arrête interne des épaulements 15 du verrou 13, et la distance entre la face interne du second bossage 17 et l'arrête transversale des crans 14 est sensiblement identique ou légèrement supérieure à la distance entre la face interne du verrou 13 et l'arrête interne des épaulements 15 du verrou 13.

On voit sur la figure 1 que la lanière 6 comporte une zone 19 de très faible section disposée entre les crans 14 et la première extrémité 18A, cette zone 19 servant de zone de rupture comme cela sera décrit ci-après. Cette zone de rupture 19 doit toutefois être positionnée le long de la lanière 6 de telle manière à ressortir du verrou 13 au moment du verrouillage complet en position de la lanière 6 dans la fente 7.

Comme on le voit sur la figure 1, la bride 5 peut être équipée d'une saillie 20 en forme d'onglet pointant dans la direction longitudinale X et destinée à coopérer avec un bord de l'ouverture 3 pour retenir la partie d'extrémité 2 de la bande 1 contre la partie d'extrémité 4 de la bande 1 sous l'effet de la détente de la bande souple 1 quand elle est repliée pour former une bague.

Par ailleurs, la partie d'extrémité 2 de la bande 1 peut être munie d'une languette de préhension 21 destinée à faciliter la manipulation de la bande 1 pour former la bague.

Selon l'invention, une section de longueur de la bande 1 entre l'ouverture 3 et la bride 5 présente une ouverture centrale longitudinale 22 sensiblement en forme de T, qui apporte au lien une flexibilité supplémentaire et facilite la courbure de la bande 1 pour former la bague. Cette ouverture longitudinale 22 permet en outre de réduire la quantité de matière utilisée pour réaliser le lien et donc son prix de revient. En outre, quand les parties mâle et femelle du système de fixation sont insérées l'une dans l'autre pour former la bague, la partie d'extrémité 2 de la bande 1 est passée dans l'ouverture 22 (dans la tête du T) pour se loger du côté intérieur de la bague, la languette de préhension 21 pouvant être ressortie seule hors de l'ouverture 22 (au pied du T) pour maintenir la partie d'extrémité 2 plaquée à l'intérieur de la bande 1.

Sur la figure 1, on a illustré également une sorte de compartiment 23 entre l'ouverture 22 et l'ouverture 3 sur la bande. Ce compartiment 23 est destiné à loger un dispositif électronique d'identification RFID.

La bande 1 est équipée d'une première zone de marquage 24 sensiblement rectangulaire plane qui longe l'ouverture longitudinale 22 de part et d'autre de celle-ci tandis que la lanière 6 est équipée d'une deuxième zone de marquage 25 sensiblement rectangulaire plane disposée entre les deux bossages 10 et 17. Ces deux zones de marquage 24 et 25 sont planes de sorte à pouvoir recevoir respectivement deux inscriptions, de préférence identiques.

Lorsque le lien est verrouillé et notamment que la lanière 6 est insérée dans la fente 7 de la bride 5, la deuxième zone de marquage 25 se répartit en deux demi-zones distinctes de part et d'autre de la bride 5 de façon analogue à la répartition en deux demi-zones distinctes de la zone 24 de part et d'autre de l'ouverture 22.

Ces inscriptions portées sur les zones de marquages 24 et 25 permettent par exemple d'identifier le support, par exemple un animal, sur lequel est fixé le lien. Elles peuvent se présenter sous forme de code à barres, de sigles ou de signes alphanumériques, et être réalisées par laser, peinture, gravure ou par tout autre procédé de marquage adapté à la matière utilisée pour réaliser le lien. Ces inscriptions seront avantageusement réalisées sur les zones de marquage respectives 24,25 lors de la fabrication du lien pour limiter la fraude.

Selon l'invention, l'ouverture 3 est bordée de plusieurs portions de bande sécables 26A, 26B,26C dans la bande ce qui rend possible au lien d'être utilisé sur un animal y compris pendant sa période de croissance.

Les portions de bande sécables 26A, 26B, 26C ont ici chacune une forme rectangulaire et se succèdent selon la direction longitudinale X depuis l'ouverture 3 jusqu'au bord d'extrémité de la partie d'extrémité 2 de la bande 1. Par portion de bande sécable, on désigne une portion de la bande qui est détachable facilement de la bande, par exemple par pelage lorsque la bande est réalisée en une matière plutôt souple ou par brisure si la bande était réalisée en une matière plutôt rigide et cassante.

Les portions de bande 26A, 26B, 26C sont conçues pour être détachables individuellement de la bande 1 par pelage et présentent chacune à cet effet un bossage 27 arrondi qui sert de point de préhension, pour une pince par exemple, pour réaliser le pelage (pour des raisons de clarté, le bossage 27 est seulement indiqué sur la portion de bande sécable 26C).

Plus particulièrement, comme visible sur la figure 1, chaque portion de bande sécable 26A, 26B, 26C est adjacente selon la direction longitudinale X à une fente 28 respective formée dans la bande 1 selon une direction transversale à la direction X. Chaque fente 28 présente une échancrure 29 à chacune de ses deux extrémités qui sert d'amorce au pelage de la portion sécable (la fente 28 et l'échancrure 29 sont seulement montrées sur une portion de bande sécable 26C par souci de clarté).

Dans l'exemple de réalisation montré sur la figure 1, on conçoit que les deux bords latéraux selon la direction longitudinale X de chaque portion de bande sécable 26A, 26B, 26C sont constitués par exemple d'un film mince de la matière de la bande 1 qui peut facilement être déchiré par pelage mais qui est également suffisamment résistant pour que le côté de la portion sécable 26A, 26B, 26C qui est commun avec un côté de l'ouverture 3 serve de bord d'appui à la protubérance 5 quand les deux extrémités 2,4 de la bande 1 sont rapprochées l'une sur l'autre pour former une bague.

Sur la figure 1, on a représenté des portions sécables de la bande 26A, 26B, 26C de forme rectangulaire qui ont des longueurs différentes selon la direction longitudinale X et en particulier qui ont une longueur qui augmente par palier en regardant dans le sens qui va de l'ouverture 3 en direction du bord d'extrémité de la partie 2 de la bande 1, ce qui permet d'avoir une augmentation de diamètre de la bague qui est adaptée à un certain rythme de croissance des animaux devant être bagués.

Ces portions de bande sécables 26A, 26B, 26C successives selon la direction longitudinale X sont donc conçues pour être détachées successivement de façon à allonger la dimension de l'ouverture 3 selon cette direction X ce qui permet à la bride 5 d'être rapprochée (par coulissement dans l'ouverture 3 allongée) en direction du bord d'extrémité 2 munie de la partie femelle sans être sortie de l'ouverture 3.

On pourrait bien entendu concevoir une forme autre que rectangulaire pour l'ouverture 3 et les portions de bande sécables 26A, 26B, 26C, sans sortir du cadre de l'invention.

Par ailleurs, sur la figure 1, on n'a représenté que trois portions de bande sécables mais il est évident que l'on peut prévoir par exemple deux ou plus de trois portions de bande sécables sans sortir du cadre de l'invention.

Dans un autre mode de réalisation particulier du lien selon l'invention, un dispositif d'identification électronique (non montré), comme une étiquette RFID, peut être incorporé dans la bande 1, par collage, sertissage, surmoulage ou autre. Une étiquette RFID permet d'enregistrer et de restituer, par l'intermédiaire d'un dispositif électronique communicant sans fil, toutes sortes d'informations nécessaires à l'identification du support sur lequel est monté le lien; pour un animal, ces informations incluent son origine, sa race, sa date de naissance, etc.

Dans le cas où l'étiquette RFID comprend une antenne et une puce électronique encapsulées dans une ampoule de verre (couramment appelée « glass tag », c'est-à-dire étiquette en verre), la fixation d'une telle étiquette RFID peut par exemple être réalisée en enfonçant l'ampoule de verre dans le compartiment 23 en saillie du bracelet prévu à cet effet sur la bande 1, de préférence au centre de la bande 1, comme montré sur la figure 1. Dans le cas où l'étiquette RFID est simplement constituée d'une antenne et d'une puce électronique, la fixation de l'étiquette RFID peut par exemple être réalisée par surmoulage si la bande 1 est en matière plastique.

Le lien constitué par la bande 1 avec le système de fixation 3,5, l'organe de blocage 6 et le moyen de verrouillage 10,11,13,14, et éventuellement le système d'extension 26 de l'ouverture 3 et le compartiment 23 de l'étiquette RFID, est réalisé de préférence d'une seule pièce, par exemple par moulage par injection d'une matière plastique, ou par découpage et emboutissage d'une tôle.

En particulier, toutes les caractéristiques du lien pourront avantageusement être obtenues par moulage d'une matière thermoplastique à partir d'un moule simple et peu onéreux en deux parties ne nécessitant pas d'outillage spécifique pour le démoulage du lien.

Le lien selon l'invention a notamment comme application la réalisation d'une bague d'identification pour animaux équipée d'un système fixation avec organe de blocage permettant une vérification simple et efficace de l'originalité du lien, c'est-à-dire que la bague fixée sur un animal est bien la bague qui a été fixée initialement sur cet animal, et dont le diamètre peut être facilement augmenté avec un outil simple sans déposer la bague de l'animal.

Pour poser le lien selon l'invention par exemple sur un membre inférieur d'un animal, on commence par rompre les tenons 9 afin de détacher la lanière 6 de la bande 1. Puis, on courbe la bande 1 sur elle-même pour former une bague et, en s'aidant de la languette de préhension 21, on passe l'ouverture 3 autour de la bride 5. La saillie 20 se bloque contre la bande 1. La partie d'extrémité 2 de la bande 1 peut être glissée dans l'ouverture 22, en faisant éventuellement ressortir la languette de préhension 21, pour former une bague compacte. On fait ensuite passer la première extrémité 18A de la lanière 6 dans la fente 12 de la bride 11, puis dans la fente 7 de la bride 5, puis dans le verrou 13. On tire fermement sur l'extrémité 18A de la lanière 6 jusqu'à rupture au niveau de la zone 19. A ce moment, la lanière 6 est complètement coincée dans le verrou 13 et est retenue dans la bride 11 du fait de la présence du bossage 10, sans possibilité d'être dégagée des fentes 7 et 12. Elle se superpose à la partie d'extrémité 2 de la bande en laissant les deux demi-zones de marquage 25 visibles du côté extérieur de la bague de part et d'autre de la bride 5. Il est alors possible de comparer facilement les inscriptions portées sur la zone de marquage 25 avec les inscriptions portées sur la zone de marquage 24 également visible du côté extérieur de la bague pour vérifier facilement l'originalité du lien.

Si on tente de forcer le lien selon l'invention, la lanière 6 sera immanquablement endommagée, ce qui sera facilement observable lors d'un contrôle réglementaire par exemple.

Du fait que l'extrémité 18A de la lanière 6 peut être enlevée, on obtient une bague extrêmement compacte et résistante aux agressions, notamment lors du frottement de la bague contre une paroi quelconque.

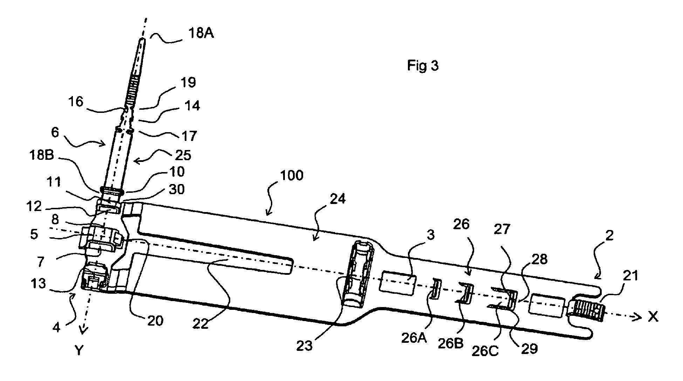

En variante, on a représenté sur la figure 3 une autre bande 100 selon l'invention dans un deuxième mode de réalisation. Sur la figure 3, les mêmes références numériques correspondent aux mêmes éléments que ceux portant les mêmes références sur les figures 1 et 2, et ces éléments remplissent respectivement les mêmes fonctions. Par souci de clarté et de concision, nous ne décrirons ci-dessous que les éléments de la bande 100 qui diffèrent de la bande 1 précédemment décrite.

Selon le deuxième mode de réalisation représenté sur la figure 3, la lanière 6 est tenue à la bande 100 par l'intermédiaire d'une zone charnière 30 au niveau de la partie d'extrémité 4 munie de la partie mâle 5 du système de fixation. La lanière 6 s'étend alors dans la seconde direction Y perpendiculaire à la première direction X, comme montré sur la figure 3. Le bossage 10 de la lanière 6 est dans ce cas positionné à proximité de la zone charnière 30.

Selon ce mode de réalisation, la deuxième zone de marquage 25 de la lanière 6 est disposée sur la face arrière de la lanière 6 non visible sur les figures, entre les deux bossages 10 et 17.

Pour poser le lien selon l'invention par exemple sur un membre inférieur d'un animal, on commence par courber la bande 1 sur elle-même pour former une bague puis, en s'aidant de la languette de préhension 21, on passe l'ouverture 3 autour de la bride 5. La saillie 20 se bloque contre la bande 1 et la partie d'extrémité 2 de la bande 1 peut être glissée dans l'ouverture 22, en faisant éventuellement ressortir la languette de préhension 21, pour former une bague compacte. On rabat ensuite la lanière 6 au niveau de la zone charnière 30 et on fait ensuite passer la première extrémité libre 18A de la lanière 6 dans la fente 12 de la bride 11, puis dans la fente 7 de la bride 5, puis dans le verrou 13. On tire alors fermement sur l'extrémité 18A de la lanière 6 jusqu'à rupture au niveau de la zone 19. La lanière 6 est alors complètement coincée dans le verrou 13 sans possibilité d'être dégagée des fentes 7 et 12. Dans le cas où la zone charnière 30 est brisée, par exemple à force de frottement de la bague contre une paroi quelconque, la lanière 6 est quand même retenue en place dans la fente 7 du fait de la présence du bossage 10.

## Revendications

1. Lien comprenant une bande (1) s'étendant selon une première direction longitudinale (X) entre deux parties d'extrémité (2,4) munies respectivement d'une partie femelle (3) et d'une partie mâle (5) d'un système de fixation, et un organe de blocage (6) de ladite partie mâle (5) dans ladite partie femelle (3) quand la partie mâle est insérée dans la partie femelle, ledit organe de blocage comprenant une lanière (6) indésirable dans une fente (7) traversant ladite partie mâle (5) du système de fixation, étant ladite lanière (6) étant destinée à être insérée dans la fente (7) selon une seconde direction (Y) sensiblement perpendiculaire à ladite première direction longitudinale (X), et en ce qu'il est prévu en outre un moyen de verrouillage (10,11,13,14) de la lanière (6) dans la fente (7) agencé de telle façon à empêcher le coulissement de la lanière (6) dans la fente (7) suivant un sens d'insertion et un sens opposé selon ladite seconde direction (Y) après que la lanière (6) a franchi une certaine position d'insertion dans la fente (7) suivant ledit sens d'insertion, **caractérisé en ce que** le moyen de verrouillage comprend des crans (14) disposés à une première extrémité (18A) de la lanière (6), un verrou (13) dans lequel viennent s'insérer lesdits crans (14) de la lanière (6) et qui est placé sur la bande (1) latéralement d'un côté de ladite fente (7) dans la partie mâle (5) du système de fixation, une bride (11) dans laquelle vient s'insérer ladite lanière (6) qui est placée sur la bande (1) latéralement de l'autre côté de ladite fente (7) en alignement avec le verrou (13) et la fente (7) suivant ladite seconde direction (Y) et un premier bossage (10) disposé à une deuxième extrémité (18B) sur la lanière (6) de telle manière à venir en butée contre la bride (11) quand ladite lanière (6) traverse ladite bride (11) et la fente (7) et que les crans (14) de ladite lanière (6) sont insérés dans ledit verrou (13).

2. Lien selon la revendication 1, dans lequel un second bossage (17) est disposé sur la lanière (6) de telle manière à venir en butée contre le verrou (13) quand le premier bossage (10) vient en butée contre la bride (11).

3. Lien selon la revendication 2, dans lequel la première extrémité (18A) de la lanière (6) comporte une zone de rupture (19), lesdits crans (14) étant interposés entre la zone de rupture (19) et ledit second bossage (17).

4. Lien selon l'une des revendications 2 ou 3, dans lequel la lanière comporte une zone de marquage (25) sensiblement rectangulaire et plane interposée entre lesdits premier et second bossages (10,17).

5. Lien selon l'une des revendications précédentes, dans lequel la lanière (6) est tenue de façon détachable à la bande (1) parallèlement à la première direction longitudinale (X) par au moins un tenon (9).

6. Lien selon l'une des revendications 1 à 4, dans lequel la lanière (6) est tenue à la bande (1) perpendiculairement à la première direction longitudinale (X) par une zone charnière (30) de la lanière (6).

7. Lien selon la revendication 6, dans lequel ledit premier bossage (10) est disposé à proximité de la zone charnière (30) de la lanière (6).

8. Lien selon l'une des revendications précédentes, dans lequel ladite bande (1) présente entre ses deux parties d'extrémité (2,4) une fente longitudinale (22) sensiblement en forme de T.

9. Lien selon la revendication 8, dans lequel la bande comporte deux zones de marquage (24) sensiblement rectangulaires et planes disposées de part et d'autre de la fente longitudinale (22) en forme de T.

10. Lien selon l'une des revendications précédentes, dans lequel la bande (1) est équipée d'un dispositif d'identification électronique RFID.

11. Lien selon l'une des revendications précédentes, dans lequel ladite partie femelle (3) du système de fixation est une ouverture dans la bande (1) et ladite partie mâle (5) du système de fixation est une protubérance munie d'une saillie (20) coopérant avec un bord de l'ouverture (3) dans la bande (1) quand lesdites parties mâle (5) et femelle (3) du système de fixation sont insérées l'une dans l'autre.

12. Lien selon l'une des revendications précédentes, dans lequel ladite partie femelle (3) du système de fixation est une ouverture dans la bande (1) bordée par une zone sécable (26) de la bande (1).

13. Lien selon l'une des revendications précédentes, dans lequel la bande (1) avec ledit système de fixation (3,5), ledit organe de blocage (6) et ledit moyen de verrouillage (10, 11, 13, 14) sont réalisés d'une seule pièce par moulage par injection d'une matière plastique.

## Patentansprüche

1. Verbindungsglied mit einem Streifenteil (1), das sich in eine erste Längsrichtung (X) zwischen zwei Endteilen (2, 4) erstreckt, die jeweils ein Aufnahmeteil (3) und ein Einsteckteil (5) eines Befestigungssystems aufweisen, und mit einem Teil zum Blockieren (6) des Einsteckteils (5) in dem Aufnahmeteil (3), wenn das Einsteckteil in das Aufnahmeteil eingefügt ist, wobei das Blockierteil ein Riementeil (6) aufweist, das in einen Schlitz (7) einfügbar ist, der in das Einsteckteil (5) des Befestigungssystems eingebracht ist, wobei das Riementeil (6) dazu eingerichtet ist, in eine zweite Richtung (Y) in den Schlitz (7) einfügbar zu sein, die im Wesentlichen rechtwinklig zu der ersten Längsrichtung (X) ist, und wobei weiterhin ein Mittel zum Verriegeln (10, 11, 13, 14) des Riementeils (6) in dem Schlitz (7) vorgesehen ist, das so eingerichtet ist, dass es ein Verschieben des Riementeils (6) in dem Schlitz (7) in eine Einfügerichtung und in eine der zweiten Richtung (Y) gegenüberliegende Richtung verhindert, nachdem das Riementeil (6) eine bestimmte Einfügeposition in dem Schlitz (7) in der Einfügerichtung überschritten hat, **dadurch gekennzeichnet, dass** das Verriegelungsmittel über Rasten (14), die an einem ersten Ende (18A) des Riementeils (6) angeordnet sind, über einen Riegel (13), in den sich die Rasten (14) des Riementeils (6) einfügen und der auf dem Streifenteil (1) seitlich auf einer Seite des Schlitzes (7) in dem Einsteckteil (5) des Befestigungssystems angeordnet ist, über eine Lasche (11), in die das Riementeil (6) einfügbar ist, das auf dem Streifenteil (1) seitlich der anderen Seite des Schlitzes (7) mit dem Riegel (13) fluchtend angeordnet ist, wobei der Schlitz (7) in die zweite Richtung (Y) ausgerichtet ist und über eine erste Erhebung (10) verfügt, die an einem zweiten Ende (18B) auf dem Riementeil (6) so angeordnet ist, dass sie an die Lasche (11) anschlägt, wenn das Riementeil (6) die Lasche (11) und den Schlitz (7) durchquert, und dass die Rasten (14) des Riementeils (6) in den Riegel (13) einfügbar sind.

2. Verbindungsglied nach Anspruch 1, bei dem eine zweite Erhebung (17) auf dem Riementeil (6) so angeordnet ist, dass sie an den Riegel (13) anschlägt, wenn die erste Erhebung (10) an die Lasche (11) anschlägt.

3. Verbindungsglied nach Anspruch 2, bei dem das erste Ende (18A) des Riementeils (6) einen Bruchbereich (19) aufweist, wobei die Rasten (14) zwischen dem Bruchbereich (19) und der zweiten Erhebung (17) angeordnet sind.

4. Verbindungsglied nach einem der Ansprüche 2 oder 3, bei dem das Riementeil einen im Wesentlichen rechteckigen und flachen Markierungsbereich (25) aufweist, der zwischen der ersten und der zweiten Erhebung (10, 17) angeordnet ist.

5. Verbindungsglied nach einem der vorangehenden Ansprüche, bei dem das Riementeil (6) an dem Streifenelement (1) parallel zu der ersten Längsrichtung (X) durch wenigstens einen Zapfen (9) lösbar gehalten ist.

6. Verbindungsglied nach einem der Ansprüche 1 bis 4, bei dem das Riementeil (6) an dem Streifenteil (1) durch einen Gelenkbereich (30) des Riementeils (6) rechtwinklig zu der ersten Längsrichtung (X) gehalten ist.

7. Verbindungsglied nach Anspruch 6, bei dem die erste Erhebung (10) nahe bei dem Gelenkbereich (30) des Riementeils (6) angeordnet ist.

8. Verbindungsglied nach einem der vorangehenden Ansprüche, bei dem das Streifenteil (1) zwischen seinen beiden Endteilen (2, 4) einen länglichen Schlitz (22) aufweist, der im Wesentlichen T-förmig ist.

9. Verbindungsglied nach Anspruch 8, bei dem das Streifenteil zwei im Wesentlichen rechteckige und flache Markierungsbereiche (24) aufweist, die beiderseits des länglichen T-förmigen Schlitzes (22) angeordnet sind.

10. Verbindungsglied nach einem der vorangehenden Ansprüche, bei dem das Streifenteil (1) mit einer RFID-Vorrichtung zum elektronischen Identifizieren ausgestattet ist.

11. Verbindungsglied nach einem der vorangehenden Ansprüche, bei dem das Aufnahmeteil (3) des Befestigungssystems eine Öffnung in dem Streifenteil (1) und das Einsteckteil (5) des Befestigungssystems eine Ausstülpung mit einem Vorsprung (20) ist, der mit einem Rand der Öffnung (3) in dem Streifenteil (1) zusammenwirkt, wenn das Einsteckteil (5) und das Aufnahmeteil (3) des Befestigungssystems ineinander eingefügt sind.

12. Verbindungsglied nach einem der vorangehenden Ansprüche, bei dem das Aufnahmeteil (3) des Befestigungssystems eine Öffnung in dem Streifenteil (1) ist, die von einem teilbaren Bereich (26) des Streifenteils (1) umgeben ist.

13. Verbindungsglied nach einem der vorangehenden Ansprüche, bei dem das Streifenteil (1) durch Spritzguss eines Kunststoffmaterials einstückig mit dem Befestigungssystem (3, 5), mit dem Blockierteil (6) und mit dem Verriegelungsmittel (10, 11, 13, 14) hergestellt ist.

## Claims

1. Tie including a strip (1) extending in a first longitudinal direction (X) between two end portions (2,4) each provided with a female part (3) and a male part (5) of a fastening system, and a member (6) for locking said male part (5) in said female part (3) when the male part is inserted into the female part, said locking member including a strap (6) insertable in a slot (7) passing through said male part (5) of the fastening system, said strap (6) being adapted to be inserted in the slot (7) in a second direction (Y) substantially perpendicular to said first longitudinal direction (X), wherein means (10, 11, 13, 14) are further provided for locking the strap (6) in the slot (7) adapted to prevent the strap (6) sliding in the slot (7) in an insertion sense and in an opposite sense both in said second direction (Y) after the strap (6) has passed a certain insertion position in the slot (7) in said insertion sense, **characterised in that** the locking means include detents (14) disposed at a first end (18A) of the strap (6), a latch (13) in which said detents (14) of the strap (6) are inserted and which is placed laterally on the strip (1) on one side of said slot (7) in the male part (5) of the fastening system, a flange (11) into which said strap (6) is inserted and which is placed laterally on the strip (1) on the other side of said slot (7) in alignment with the latch (13) and the slot (7) in said second direction (Y) and a first boss (10) disposed at a second end (18B) of the strap (6) so as to abut against the flange (11) when said strap (6) extends through said flange (11) and the slot (7) and the detents (14) of said strap (6) are inserted in said latch (13).

2. Tie according to claim 1, wherein a second boss (17) is disposed on the strap (6) so as to abut against the latch (13) when the first boss (10) comes to abut against the flange (11).

3. Tie according to claim 2, wherein the first end (18A) of the strap (6) includes a rupture zone (19), said detents (14) being disposed between the rupture zone (19) and said second boss (17).

4. Tie according to Claim 2 or claim 3, wherein the strap includes a substantially rectangular and flat marking area (25) disposed between said first and second bosses (10,17).

5. Tie according to any one of the preceding claims, wherein the strap (6) is releasably secured to the strip (1) parallel to the first longitudinal direction (X) by at least one peg (9).

6. Tie according to any one of claims 1 to 4, wherein the strap (6) is secured to the strip (1) perpendicularly to the first longitudinal direction (X) by a hinge zone (30) of the strap (6)

7. Tie according to claim 6, wherein said first boss (10) is disposed close to the hinge area (30) of the strap (6).

8. Tie according to any one of the preceding claims, wherein said strip (1) has between its two end portions (2,4) a substantially T-shaped longitudinal slot (22).

9. Tie according to claim 8, wherein the strip includes two substantially rectangular and flat marking areas (24) arranged on either side of the T-shaped longitudinal slot (22).

10. Tie according to any one of the preceding claims, wherein the strip (1) is equipped with an RFID electronic identification device.

11. Tie according to any one of the preceding claims, wherein said female part (3) of the fastening system is an opening in the strip (1) and said male part (5) of the fastening system is a protuberance provided with a projection (20) cooperating with an edge of the opening (3) in the strip (1) when said male part (5) and said female part (3) of the fastening system are inserted one into the other.

12. Tie according to any one of the preceding claims, wherein said female part (3) of the fastening system is an opening in the strip (1) surrounded by a frangible area (26) of the strip (1).

13. Tie according to any one of the preceding claims, wherein the strip (1) with said fastening system (3, 5), said locking member (6) and said locking means (10, 11, 13, 14) are made in one piece by injection moulding a plastic material.
